# EUROPEAN PATENT APPLICATION

(11) **EP 4 421 104 A1**
(43) Date of publication of application: **28.08.2024**
(21) Application number: 22883649.0
(22) Date of filing: 20.10.2022
(51) Int. Cl.: C08G 63/08, C08L 101/16

(54) **B-METHYL-DELTA-VALEROLACTONE POLYMER**

(30) Priority: 22.10.2021 JP 2021173306
(71) Applicant: Kuraray Co., Ltd., Kurashiki-shi, Okayama 710-0801 (JP)
(72) Inventor: ISHIO, Muneki, Tsukuba-shi, Ibaraki 305-0841 (JP); SANO, Yuki, Tokyo 100-0004 (JP); HOSAKA, Yusaku, Tsukuba-shi, Ibaraki 305-0841 (JP)
(74) Representative: D Young & Co LLP
(86) International application number: PCT/JP2022/039197
(87) International publication number: WO 2023/068346

(57) **Abstract**

Provided is a β-methyl-δ-valerolactone polymer represented by the following general formula (I).

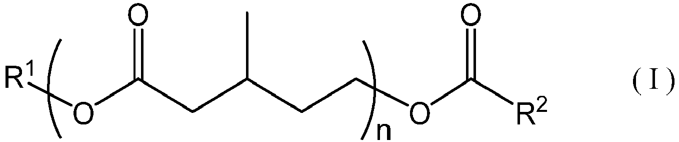

## Description

### Technical Field

The present invention relates to a β-methyl-δ-valerolactone polymer.

### Background Art

From the viewpoint of global environmental conservation, there is a demand for reducing the environmental load on plastic materials used in products in a wide range of fields. In order to reduce the environmental load, development of a plastic material using polylactic acid, which is one of "biodegradable plastics", has been actively conducted. However, a molded body made of polylactic acid is brittle compared to a petroleum-based plastic, and tends to be inferior in viscosity, flexibility, and heat resistance, and is easily hydrolyzed, and thus the use as a resin material may be limited.

Therefore, a molded article is known in which various physical properties are imparted to a resin composition obtained by mixing a biodegradable aliphatic polyester with a polylactic acid, while improving the defects of the polylactic acid, by molding the resin composition. For example, PTL 1 discloses a biodegradable string containing a lactic acid-based polymer, a biodegradable aliphatic polyester other than the lactic acid-based polymer, and a lubricant. The biodegradable string is biodegradable and can be continuously tied by a current binding machine. Further, PTL 2 discloses a biodegradable plastic or sheet composed of a polylactic acid polymer and a biodegradable aliphatic polyester. It is described that the biodegradable plastic or sheet is excellent in impact resistance.

In addition, various studies have been made on biodegradable aliphatic polyesters to be mixed with polylactic acid as described above to impart various physical properties. For example, PTL 3 discloses, as a biodegradable aliphatic polyester, an alkyl-δ-valerolactone polyester having thermal stability and being in a liquid state.

### Citation List

### Patent Literature

PTL 1: JP H09-111107 A
PTL 2: JP 2001-115350 A
PTL 3: JP H03-181516 A

### Summary of Invention

### Technical Problem

PTLs 1 and 2 describe that an aliphatic polyester obtained by ring-opening polymerization of a cyclic lactone can be used as the biodegradable aliphatic polyester. However, PTLs 1 and 2 do not disclose details of the aliphatic polyester, such as molecular weight, viscosity, and specific structure.

Reference Example 1 of PTL 3 discloses a liquid β-methyl-δ-valerolactone polymer (average molecular weight: 1,700) in which both terminals of poly(β-methyl-δ-valerolactone) diol are modified with acetic anhydride. However, PTL 3 does not specifically disclose the modification effect of the polymer with respect to the resin.

Accordingly, the present invention provides a β-methyl-δ-valerolactone polymer which can be used as an excellent modifier for resins.

### Solution to Problem

As a result of intensive studies to solve the above problems, the present inventors have conceived the following present invention and found that the problems can be solved.

That is, the present invention is as follows.

[1] A β-methyl-δ-valerolactone polymer represented by the following general formula (I): 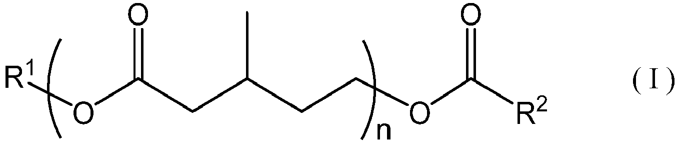
   in the general formula (I), R¹ represents a hydrogen atom, a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the following formula (X), or an oxygen atom-containing hydrocarbon group in which one hydrogen atom bonded to a carbon atom at at least one terminal of a branched alkyl group having 3 to 20 carbon atoms is substituted with a group represented by the following formula (X); in the following formula (X), a bonding site represented by * is bonded to the linear alkyl group having 1 to 20 carbon atoms or the branched alkyl group having 3 to 20 carbon atoms; 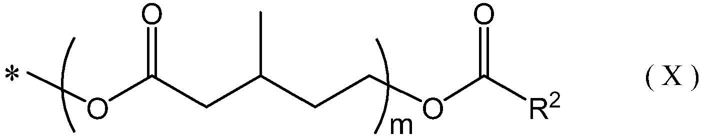
   R² represents a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms; provided that when R¹ is a group in which one hydrogen atom bonded to a carbon atom at a terminal of an ethyl group is substituted with a group represented by the formula (X), all R²'s are not a methyl group at the same time; n is an integer of 8 to 1,000, and m is an integer of 8 to 1,000; and when a plurality of R²'s and m's are present, they may be the same or different from each other.
[2] The β-methyl-δ-valerolactone polymer according to [1] above, in which R¹ is a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the formula (X), or an oxygen atom-containing hydrocarbon group in which one hydrogen atom bonded to a carbon atom at at least one terminal of a branched alkyl group having 3 to 20 carbon atoms is substituted with a group represented by the formula (X).
[3] The β-methyl-δ-valerolactone polymer according to claim 1, in which R¹ is a linear or branched alkyl group having 1 to 16 carbon atoms.
[4] The β-methyl-δ-valerolactone polymer according to [1] above, in which R¹ is an oxygen atom-containing hydrocarbon group in which one hydrogen atom bonded to a carbon atom at a terminal of a linear alkyl group having 1 to 20 carbon atoms is substituted with a group represented by the formula (X).
[5] The β-methyl-δ-valerolactone polymer according to [1] above, in which R¹ is an oxygen atom-containing hydrocarbon group in which one hydrogen atom bonded to a carbon atom at at least one terminal of a branched alkyl group having 3 to 10 carbon atoms is substituted with a group represented by the formula (X).
[6] The β-methyl-δ-valerolactone polymer according to any one of [1] to [5] above, in which R² is a linear alkyl group having 1 to 10 carbon atoms or an aryl group having 6 to 12 carbon atoms.

### Advantageous Effects of Invention

According to the present invention, it is possible to provide a β-methyl-δ-valerolactone polymer which can be used as an excellent modifier for resins.

### Description of Embodiments

Hereinafter, a description will be given based on an example of embodiments of the present invention. However, the embodiments shown below are examples for embodying the technical idea of the present invention, and the present invention is not limited to the following description.

In addition, in the description herein, preferred forms of the embodiments are shown, but a combination of two or more of the individual preferred forms is also a preferred form. Regarding the matters indicated by the numerical ranges, in a case where there are several numerical ranges, it is possible to selectively combine the lower limit value and the upper limit value thereof to obtain a preferred embodiment.

In the description herein, when there is a description of a numerical range of "XX to YY", it means "XX or more and YY or less". When the term "molecular weight" is simply used, it means "number average molecular weight" unless otherwise specified. In addition, the term "viscosity" means a viscosity measured with an E-type viscometer.

The β-methyl-δ-valerolactone polymer of the present embodiment can be used as an excellent modifier for resins by having a structure represented by the above general formula (I).

In addition, the β-methyl-δ-valerolactone polymer of the present embodiment (hereinafter, sometimes simply referred to as a "polymer") is a polymer obtained by ring-opening polymerization of β-methyl-δ-valerolactone, in which at least one hydroxy group at a molecular terminal is modified to another functional group, and thus can be a polymer in which a decrease in thermal decomposability is suppressed. Further, it is expected that the polymer can express a modification effect in which an improvement in hydrolysis resistance, other functions, and handleability are well balanced depending on the structure of the molecular terminal and the number of terminals. Further, since the raw material of the polymer is β-methyl-δ-valerolactone, it is considered that the polymer has good biodegradability.

Furthermore, the polymer of the present embodiment can have a high viscosity, and can be expected to be used as a material for a pressure-sensitive adhesive having good adhesiveness.

### <β-Methyl-δ-Valerolactone Polymer>

The polymer of the present embodiment is represented by the following general formula (I).

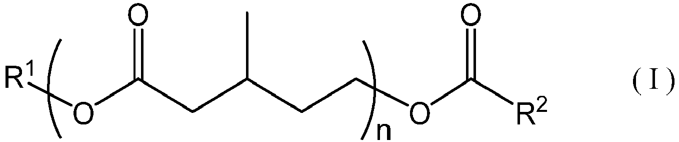

In the general formula (I), R¹ represents a hydrogen atom, a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms. In the case of the above-mentioned "branched alkyl group", the number of carbon atoms is 3 to 20, and in the case of the above-mentioned "branched alkenyl group", the number of carbon atoms is 3 to 20.

Examples of the linear alkyl group having 1 to 20 carbon atoms include a methyl group, an ethyl group, a n-propyl group, a n-butyl group, a n-pentyl group, a n-hexyl group, a n-heptyl group, a n-octyl group, a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, and a n-icosyl group.

Examples of the branched alkyl group having 3 to 20 carbon atoms include an isopropyl group, a 1-methylpropyl group, a 2-methylpropyl group, a t-butyl group, a 1,1-dimethylpropyl group, a 2,2-dimethylpropyl group, a 1,2-dimethylpropyl group, a 1-ethylpropyl group, a 2-ethylpropyl group, a 1,1-diethylpropyl group, a 1-methylbutyl group, a 2-methylbutyl group, a 3-methylbutyl group, a 1,1-dimethylbutyl group, a 2,2-dimethylbutyl group, a 3,3-dimethylbutyl group, a 1,3,3-trimethylbutyl group, a 1-ethylbutyl group, a 2-ethylbutyl group, a 3,3-dimethylbutyl group, a 1-propylbutyl group, a 1-methylpentyl group, a 2-methylpentyl group, a 3-methylpentyl group, a 4-methylpentyl group, a 4,4-dimethylpentyl group, a 1-ethylpentyl group, a 2-ethylpentyl group, a 3-ethylpentyl group, a 4-ethylpentyl group, a 1-propylpentyl group, a 2-propylpentyl group, a 1-butylpentyl group, a 1-methylhexyl group, a 2-methylhexyl group, a 3-methylhexyl group, a 4-methylhexyl group, a 5-methylhexyl group, a 5,5-dimethylhexyl group, a 1-ethylhexyl group, a 2-ethylhexyl group, a 3-ethylhexyl group, a 4-ethylhexyl group, a 1-propylhexyl group, a 2-propylhexyl group, a 3-propylhexyl group, a 1-butylhexyl group, a 2-butylhexyl group, a 1-methylheptyl group, a 2-methylheptyl group, a 3-methylheptyl group, a 4-methylheptyl group, a 5-methylheptyl group, a 6-methylheptyl group, a 6,6-dimethylheptyl group, a 1-ethylheptyl group, a 2-ethylheptyl group, a 3-ethylheptyl group, a 4-ethylheptyl group, a 5-ethylheptyl group, a 1-propylheptyl group, a 2-propylheptyl group, a 3-propylheptyl group, a 1-methyloctyl group, a 2-methyloctyl group, a 3-methyloctyl group, a 4-methyloctyl group, a 5-methyloctyl group, a 6-methyloctyl group, a 7-methyloctyl group, a 7,7-dimethyloctyl group, a 1-ethyloctyl group, a 2-ethyloctyl group, a 3-ethyloctyl group, a 4-ethyloctyl group, a 5-ethyloctyl group, a 6-ethyloctyl group, a 1-methylnonyl group, a 2-methylnonyl group, a 3-methylnonyl group, a 4-methylnonyl group, a 5-methylnonyl group, a 6-methylnonyl group, a 7-methylnonyl group, an 8-methylnonyl group, and a 3,5,5-trimethylhexyl group.

From the viewpoint of handleability, the linear or branched alkyl group having 1 to 20 carbon atoms is preferably a linear or branched alkyl group having 1 to 16 carbon atoms, more preferably a linear or branched alkyl group having 1 to 10 carbon atoms, and still more preferably a linear or branched alkyl group having 1 to 5 carbon atoms. Specifically, a methyl group, an ethyl group, a n-propyl group, an isopropyl group, a n-butyl group, a 1-methylbutyl group, a 3-methylbutyl group, a n-pentyl group, and a 2,2-dimethylpropyl group are preferable.

Examples of the linear alkenyl group having 2 to 20 carbon atoms include an ethenyl group, a n-propenyl group, a n-butenyl group (for example, a 2-butenyl group and a 3-butenyl group), a n-pentenyl group (for example, a 3-pentenyl group and a 4-pentenyl group), a n-hexenyl group (for example, a 1-hexenyl group and a 5-hexenyl group), a n-heptenyl group (for example, a 1-heptenyl group and a 1,3-heptadienyl group), a n-octenyl group (for example, a 7-octenyl group and a 2,7-octadienyl group), a n-nonenyl group (for example, a 3-nonenyl group and a 3,6-nonadienyl group), a n-decenyl group (for example, a 1,3-decadienyl group and a 1,3,5-decatrienyl group), a n-undecenyl group (for example, 2-undecenyl and a 2,4-undecadienyl group), a n-dodecenyl group (for example, a 2-dodecenyl group), a tridecenyl group (for example, a 2-tridecenyl group), a n-tetradecenyl group (for example, a 2-tetradecenyl group), a n-pentadecenyl group (for example, a 2-pentadecenyl group), a n-hexadecenyl group (for example, a 2-hexadecenyl group), a n-heptadecenyl group (for example, a 2-heptadecenyl group), a n-octadecenyl group (for example, a 2-octadecenyl group), a n-nonadecenyl group (for example, a 2-nonadecenyl group), and a n-icosenyl group (for example, a 2-icosenyl group).

Examples of the branched alkenyl group having 3 to 20 carbon atoms include an isopropenyl group, a 1-methylpropenyl group, a 2-methylpropenyl group, a t-butenyl group, a 1,1-dimethylpropenyl group, a 2,2-dimethylpropenyl group, a 1,2-dimethylpropenyl group, a 1-ethylpropenyl group, a 2-ethylpropenyl group, a 1,1-diethylpropenyl group, a 1-methylbutenyl group, a 2-methylbutenyl group, a 3-methyl-2-butenyl group, a 3-methyl-3-butenyl group, a 1,1-dimethylbutenyl group, a 2,2-dimethylbutenyl group, a 3,3-dimethylbutenyl group, a 1,3,3-trimethylbutenyl group, a 1-ethylbutenyl group, a 2-ethylbutenyl group, a 3,3-dimethylbutenyl group, a 1-propylbutenyl group, a 1-methylpentenyl group, a 2-methylpentenyl group, a 3-methylpentenyl group, a 4-methylpentenyl group, a 4,4-dimethylpentenyl group, a 1-ethylpentenyl group, a 2-ethylpentenyl group, a 3-ethylpentenyl group, a 4-ethylpentenyl group, a 1-propylpentenyl group, a 2-propylpentenyl group, a 1-butylpentenyl group, a 1-methylhexenyl group, a 2-methylhexenyl group, a 3-methylhexenyl group, a 4-methylhexenyl group, a 5-methylhexenyl group, a 5,5-dimethylhexenyl group, a 1-ethylhexenyl group, a 2-ethylhexenyl group, a 3-ethylhexenyl group, a 4-ethylhexenyl group, a 1-propylhexenyl group, a 2-propylhexenyl group, a 3-propylhexenyl group, a 1-butylhexenyl group, a 2-butylhexenyl group, a 1-methylheptenyl group, a 2-methylheptenyl group, a 3-methylheptenyl group, a 4-methylheptenyl group, a 5-methylheptenyl group, a 6-methylheptenyl group, a 6,6-dimethylheptenyl group, a 1-ethylheptenyl group, a 2-ethylheptenyl group, a 3-ethylheptenyl group, a 4-ethylheptenyl group, a 5-ethylheptenyl group, a 1-propylheptenyl group, a 2-propylheptenyl group, a 3-propylheptenyl group, a 1-methyloctenyl group, a 2-methyloctenyl group, a 3-methyloctenyl group, a 4-methyloctenyl group, a 5-methyloctenyl group, a 6-methyloctenyl group, a 7-methyloctenyl group, a 7,7-dimethyloctenyl group, a 1-ethyloctenyl group, a 2-ethyloctenyl group, a 3-ethyloctenyl group, a 4-ethyloctenyl group, a 5-ethyloctenyl group, a 6-ethyloctenyl group, a 1-methylnonenyl group, a 2-methylnonenyl group, a 3-methylnonenyl group, a 4-methylnonenyl group, a 5-methylnonenyl group, a 6-methylnonenyl group, a 7-methylnonenyl group, an 8-methylnonenyl group, and a 3,5,5-trimethylhexenyl group.

From the viewpoint of handleability, the linear or branched alkenyl group having 2 to 20 carbon atoms is preferably a linear or branched alkenyl group having 2 to 15 carbon atoms, more preferably a linear or branched alkenyl group having 3 to 10 carbon atoms, and still more preferably a linear or branched alkenyl group having 3 to 6 carbon atoms.

Examples of the aryl group having 6 to 12 carbon atoms include a phenyl group, a 2-methylphenyl group, a 4-methylphenyl group, a 2,4-dimethylphenyl group, and a 2-naphthyl group. A phenyl group is preferable.

Examples of the arylalkyl group having 7 to 12 carbon atoms include a phenylmethyl group, a phenylethyl group, a phenylpropyl group, a phenylbutyl group, a phenylpentyl group, a phenylhexyl group, a naphthylmethyl group, and a naphthylethyl group.
A phenylmethyl group is preferable.

Further, in the general formula (I), R¹ represents, in addition to the above-described substituents, an oxygen atom-containing hydrocarbon group in which one hydrogen atom bonded to a carbon atom at a terminal of a linear alkyl group having 1 to 20 carbon atoms is substituted with a group represented by the following formula (X), or an oxygen atom-containing hydrocarbon group in which one hydrogen atom bonded to a carbon atom at at least one terminal of a branched alkyl group having 3 to 20 carbon atoms is substituted with a group represented by the following formula (X). In the above formula (X), a bonding site represented by * is bonded to the linear alkyl group having 1 to 20 carbon atoms or the branched alkyl group having 3 to 20 carbon atoms.

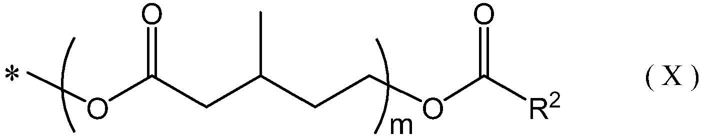

R² in the above formula (X) has the same definition as R² to be described later.

The linear alkyl group having 1 to 20 carbon atoms bonded to the formula (X) can be exemplified by the same groups as those exemplified as the "linear alkyl group having 1 to 20 carbon atoms" described above. The linear alkyl group having 1 to 20 carbon atoms bonded to the formula (X) is preferably a linear alkyl group having 1 to 15 carbon atoms, more preferably a linear alkyl group having 1 to 10 carbon atoms, still more preferably a linear alkyl group having 2 to 10 carbon atoms, and even more preferably a linear alkyl group having 2 to 5 carbon atoms.

The branched alkyl group having 3 to 20 carbon atoms bonded to the formula (X) can be exemplified by the same groups as those exemplified as the "branched alkyl group having 3 to 20 carbon atoms" described above. The branched alkyl group having 3 to 20 carbon atoms bonded to the formula (X) is preferably a branched alkyl group having 3 to 15 carbon atoms, more preferably a branched alkyl group having 3 to 10 carbon atoms, still more preferably a branched alkyl group having 3 to 6 carbon atoms, and may be a branched alkyl group having 3 to 5 carbon atoms.

In addition, one hydrogen atom bonded to all terminal carbon atoms of the branched alkyl group having 3 to 20 carbon atoms may be an oxygen atom-containing hydrocarbon group substituted with a group represented by the above formula (X).

m represents an average number of repetitions, and is an integer of 8 to 1,000, preferably 8 to 800, more preferably 10 to 500, and still more preferably 10 to 300, and may be 10 to 100, may be 10 to 80, and may be 10 to 60. When m is an integer of less than 8, it may be difficult to obtain the modification effect. When m is an integer of more than 1,000, the handleability and productivity as a modifier may be poor.

When a plurality of groups represented by the formula (X) are present in R¹, they may be the same or different from each other.

In the above formula (I), a plurality of R²'s and m's may be present. When a plurality of R²'s are present, they may be the same or different from each other. When a plurality of m's are present, they may be the same or different from each other.

In a case where R¹ represents an oxygen atom-containing hydrocarbon group in which one hydrogen atom bonded to a carbon atom at a terminal of a linear alkyl group having 1 to 20 carbon atoms is substituted with a group represented by the formula (X), the following structural examples can be specifically exemplified as the above general formula (I).

### <1st Example>

In a case where R¹ represents an oxygen atom-containing hydrocarbon group in which one hydrogen atom bonded to a carbon atom at a terminal of a linear alkyl group having Q carbon atoms is substituted with a group represented by the formula (X), the above general formula (I) is represented by the following general formula (I-a): provided that Q is an integer of 1 to 20.

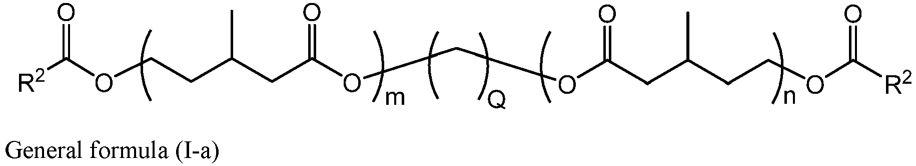

### <2nd Example>

In a case where R¹ represents an oxygen atom-containing hydrocarbon group in which one hydrogen atom bonded to a carbon atom at a terminal of an ethyl group is substituted with a group represented by the formula (X), the above general formula (I) is represented by the following general formula (I-b).

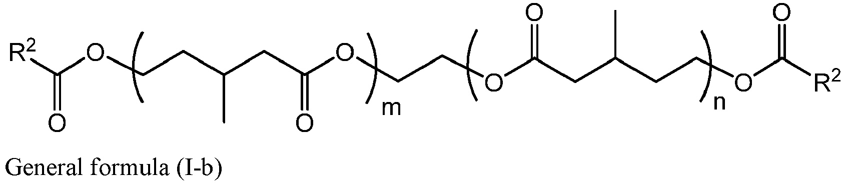

In a case where R¹ represents an oxygen atom-containing hydrocarbon group in which one hydrogen atom bonded to a carbon atom at at least one terminal of a branched alkyl group having 3 to 20 carbon atoms is substituted with a group represented by the formula (X), the following structural examples can be specifically exemplified as the above general formula (I).

### <3rd Example>

In a case where R¹ represents an oxygen atom-containing hydrocarbon group in which one hydrogen atom bonded to the carbon atom at each terminal carbon atom of the 2-methylpropyl group is substituted with a group represented by the formula (X), the above general formula (I) is represented by the following general formula (I-c).

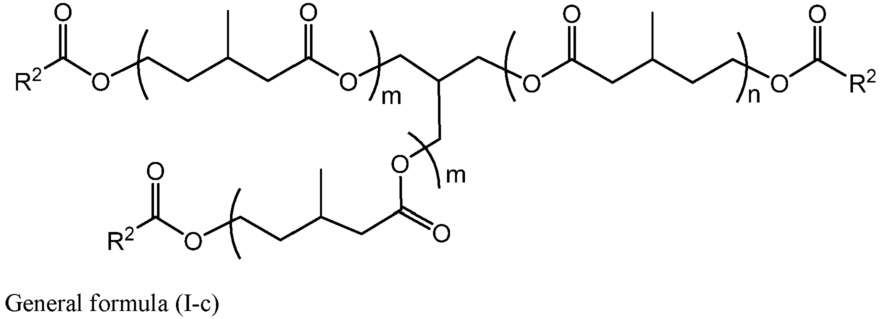

### <4th Example>

In a case where R¹ represents an oxygen atom-containing hydrocarbon group in which one hydrogen atom bonded to the carbon atom at two terminal carbon atoms of the 2,2-dimethylpropyl group is substituted with a group represented by the formula (X), the above general formula (I) is represented by the following general formula (I-d).

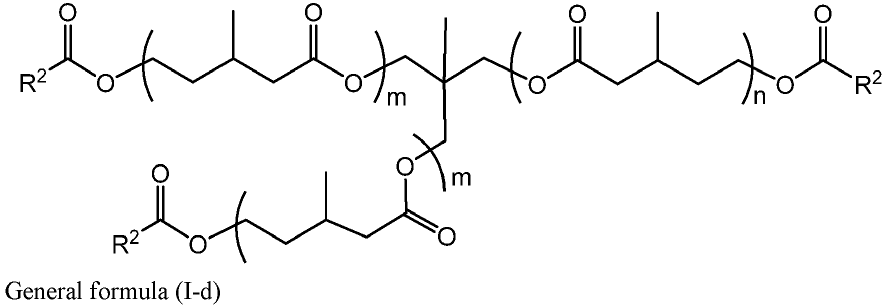

### <5th Example>

In a case where R¹ represents an oxygen atom-containing hydrocarbon group in which one hydrogen atom bonded to the carbon atom at two terminal carbon atoms of the 2,2-dimethylbutyl group is substituted with a group represented by the formula (X), the above general formula (I) is represented by the following general formula (I-e).

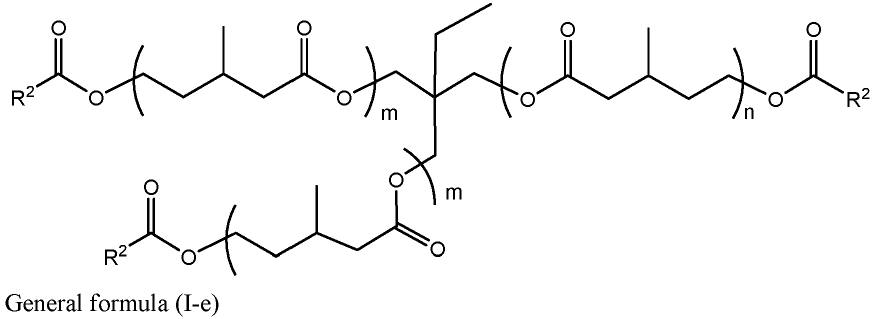

### <6th Example>

In a case where R¹ represents an oxygen atom-containing hydrocarbon group in which one hydrogen atom bonded to the carbon atom at each terminal carbon atom of the 2,2-dimethylpropyl group is substituted with a group represented by the formula (X), the above general formula (I) is represented by the following general formula (I-f).

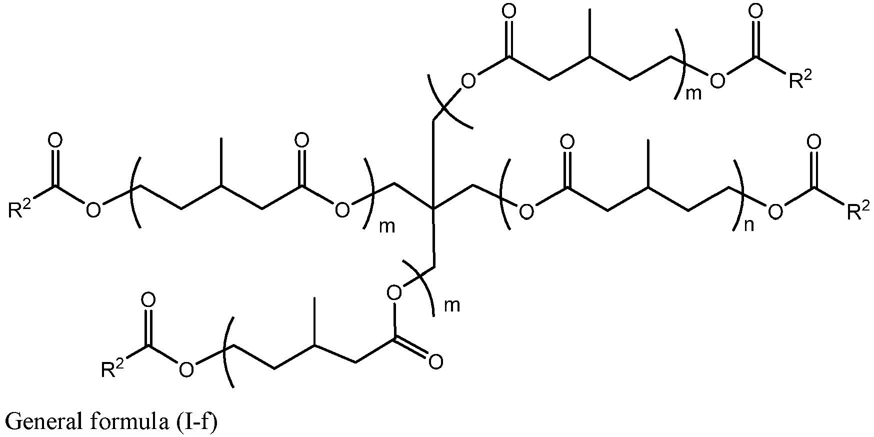

From the viewpoint of easily obtaining a modification effect, R¹ is preferably a linear or branched alkyl group having 1 to 20 carbon atoms, a linear alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the above formula (X), or an oxygen atom-containing hydrocarbon group in which one hydrogen atom bonded to a carbon atom at at least one terminal of a branched alkyl group having 3 to 20 carbon atoms is substituted with a group represented by the above formula (X).

In the general formula (I), R² represents a linear or branched alkyl group having 2 to 20 carbon atoms, a linear or branched alkenyl group having 2 to 20 carbon atoms, an aryl group having 6 to 12 carbon atoms, or an arylalkyl group having 7 to 12 carbon atoms. In the case of the above-mentioned "branched alkyl group", the number of carbon atoms is 3 to 20, and in the case of the above-mentioned "branched alkenyl group", the number of carbon atoms is 3 to 20.

The linear or branched alkyl group having 1 to 20 carbon atoms represented by R² can be exemplified by the same groups as those exemplified as the "linear or branched alkyl group having 1 to 20 carbon atoms" described above. From the viewpoint of handleability, the linear or branched alkyl group having 1 to 20 carbon atoms represented by R² is preferably a linear or branched alkyl group having 1 to 15 carbon atoms, more preferably a linear or branched alkyl group having 1 to 10 carbon atoms, and still more preferably a linear or branched alkyl group having 1 to 5 carbon atoms. Specifically, a methyl group, an ethyl group, a n-propyl group, an isopropyl group, a n-butyl group, a 1-methylbutyl group, a n-pentyl group, and a 2,2-dimethylpropyl group are preferable.

The linear or branched alkenyl group having 2 to 20 carbon atoms represented by R² can be exemplified by the same groups as those exemplified as the "linear or branched alkenyl group having 2 to 20 carbon atoms" described above. From the viewpoint of handleability, the linear or branched alkenyl group having 2 to 20 carbon atoms represented by R² is preferably a linear or branched alkenyl group having 2 to 15 carbon atoms, more preferably a linear or branched alkenyl group having 3 to 10 carbon atoms, and still more preferably a linear or branched alkenyl group having 3 to 6 carbon atoms.

The aryl group having 6 to 12 carbon atoms represented by R² can be exemplified by the same groups as those exemplified as the "aryl group having 6 to 12 carbon atoms" described above. The aryl group having 6 to 12 carbon atoms represented by R² is preferably a phenyl group.

The arylalkyl group having 7 to 12 carbon atoms represented by R² can be exemplified by the same groups as those exemplified as the "arylalkyl group having 7 to 12 carbon atoms" described above. The arylalkyl group having 7 to 12 carbon atoms represented by R² is preferably a phenylmethyl group.

From the viewpoint of easily obtaining a modification effect, R² is preferably a linear alkyl group having 1 to 10 carbon atoms or an aryl group having 6 to 12 carbon atoms.

In the polymer of the present embodiment, in the above general formula (I), when R¹ is a group in which one hydrogen atom bonded to a carbon atom at a terminal of an ethyl group is substituted with a group represented by the above formula (X), all R²'s are not a methyl group at the same time. That is, the polymer of the present embodiment is not a polymer represented by the following general formula.

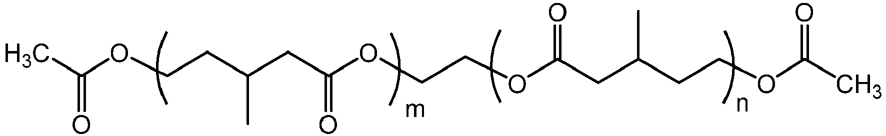

In a case where the linking portion (linker moiety) connecting the repeating unit of n and the repeating unit of m is relatively short, the modification effect of hydrolysis resistance tends to be easily reduced. Further, in a case where two terminals are acetyl groups, both the modification effect and the heat resistance of the polymer tend to be insufficiently exhibited. On the other hand, when the linker moiety has a branched shape and the number of terminal acetyl groups is increased, there is a tendency that a modification effect having a good balance between functions such as improvement in hydrolysis resistance and compatibility with a resin and handleability is exhibited. In particular, as the molecular weight of the polymer represented by the above general formula is smaller (for example, the number average molecular weight is less than 2,000), the effect as a modifier tends to be hardly obtained.

n represents an average number of repetitions, and is an integer of 8 to 1,000, preferably 8 to 800, more preferably 10 to 600, still more preferably 10 to 500, and even more preferably 10 to 300. When n is an integer of less than 8, it may be difficult to obtain the modification effect. When n is an integer of more than 1,000, the handleability and productivity as a modifier may be poor.

### (Number Average Molecular Weight)

The number average molecular weight of the polymer is preferably 2,000 or more, more preferably 2,500 or more, and still more preferably 3,000 or more, from the viewpoint that a modification effect is easily obtained. From the viewpoint of handleability during molding and productivity, the number average molecular weight of the polymer is preferably 100,000 or less, more preferably 80,000 or less, and still more preferably 50,000 or less. That is, the number average molecular weight of the polymer is preferably 2,000 or more and 100,000 or less.

All of the "number average molecular weight" described in the description herein is a number average molecular weight in terms of standard polystyrene obtained by gel permeation chromatography (GPC) measurement. A detailed measurement method can follow the method described in Examples.

### (Weight Average Molecular Weight)

The weight average molecular weight of the polymer is preferably 3,000 or more and 200,000 or less. When the weight average molecular weight is 3,000 or more, favorable viscosity is easily exhibited. When the weight average molecular weight is 200,000 or less, excellent handleability and productivity during molding are easily achieved. The weight average molecular weight of the polymer is more preferably 3,700 or more, and still more preferably 4,500 or more. The weight average molecular weight of the polymer is more preferably 160,000 or less, still more preferably 125,000 or less, and even more preferably 100,000 or less.

In the description herein, the weight average molecular weight of the β-methyl-δ-valerolactone polymer is a weight average molecular weight in terms of standard polystyrene obtained by gel permeation chromatography (GPC) measurement. A detailed measurement method can follow the method described in Examples.

### (Viscosity)

In the present invention, the "viscosity" is a viscosity measured by an E-type viscometer. The measurement temperature can be optimized according to the molecular weight.

The range of the preferable viscosity varies depending on the use of the polymer, but is preferably 400 mPa s or more at 80°C and more preferably 1,000 mPa s or more at 80°C from the viewpoint of sufficiently exhibiting functions such as substrate retention, strength, and adhesiveness.

In addition, the upper limit value of the viscosity of the polymer is not limited as long as it is measured by an E-type viscometer. In the measurement by the E-type viscometer, for example, in a case where the molecular weight of the polymer exceeds around 25,000, the viscosity is too high, and thus the measurement becomes difficult even when the measurement temperature is increased.

The polymer has a viscosity of, for example, 400 to 150,000 mPa·s at 80°C, and thus is suitable as a modifier for resins such as polylactic acid. In addition, the polymer can be expected to be used as a material for a pressure-sensitive adhesive having good adhesiveness by having a viscosity of 400 to 150,000 mPa·s at 80°C.

When the polymer is measured by an E-type viscometer, the measurement temperature can be set according to the molecular weight. It is also a preferred embodiment that the polymer has a viscosity of, for example, preferably 3,500 to 150,000 mPa·s, and more preferably 4,000 to 150,000 mPa s at 30°C. In addition, it is also a preferred embodiment that the polymer has a viscosity of, for example, preferably 650 to 150,000 mPa s, and more preferably 800 to 150,000 mPa·s at 60°C.

### <Production Method>

The method for producing the polymer of the present embodiment is not particularly limited. However, from the viewpoint of productivity and simplicity, or in the case of producing a polymer having a high molecular weight, it is preferable to adopt a production method including a step of performing a terminal modification reaction by adding a terminal modifying agent to a reaction liquid obtained by reacting β-methyl-δ-valerolactone, an alcohol compound or water, and a base catalyst (hereinafter, also referred to as a "reaction step").

The production method is characterized in that a terminal modifying agent is added directly to a reaction liquid obtained by reacting β-methyl-δ-valerolactone, an alcohol compound or water, and a base catalyst. That is, after the ring-opening polymerization of β-methyl-δ-valerolactone, the terminal modifying agent can be added to the reactor in which the ring-opening polymerization is performed without taking out the ring-opening polymer once, and the terminal modification of the ring-opening polymer can be performed. Since the reaction step is performed by the ring-opening polymerization reaction and the terminal modification reaction in one pot, the above production method can be said to be a simplified process.

The polymer of the present embodiment is not produced by being limited to the above-described production method.

Here, Reference Example 1 of PTL 3 describes that the molecular weight is reduced by terminal modification.

Usually, β-methyl-δ-valerolactone becomes a ring-opened polymer having a hydroxy group at the terminal by a ring-opening polymerization reaction. When the ring-opening polymer has a hydroxy group at the terminal as described above, depolymerization is likely to occur. Since the terminal modification of the ring-opening polymer once taken out is performed at a relatively high temperature (about 100°C), the thermal decomposition rate tends to be high, and it is considered that the ring-opening polymer causes depolymerization to reduce the molecular weight.

On the other hand, according to the above-described production method, it is possible to obtain a polymer having a high molecular weight without reducing the molecular weight in spite of the fact that the terminal is modified.

### [Alcohol Compound or Water]

The alcohol compound that can be used in the present embodiment is not particularly limited as long as the effects of the present invention can be obtained.

Examples of the alcohol compound include an alcohol of a linear or branched aliphatic hydrocarbon having 1 to 20 carbon atoms, an alcohol of an aromatic hydrocarbon having 6 to 12 carbon atoms, and an alcohol of an alkyl aromatic hydrocarbon having 7 to 12 carbon atoms. These alcohol compounds may have a saturated or unsaturated hydrocarbon group. In the case of the above-mentioned "alcohol of a branched aliphatic hydrocarbon", the number of carbon atoms is 3 to 20.

The alcohol compound may be a monohydric alcohol or may be a polyhydric alcohol such as a dihydric alcohol or a trihydric alcohol.

The water that can be used in the present embodiment is not particularly limited as long as the effects of the present invention can be obtained. For example, tap water, distilled water, ion-exchanged water, industrial water, or deionized water can be used.

### [Base Catalyst]

Examples of the base catalyst that can be used in the present embodiment include metal catalysts such as alkali metals and alkali metal compounds, and organic base compounds. The base catalyst may be used alone or in combination of two or more thereof.

Examples of the alkali metal compound include an organic alkali metal compound, an alkali metal hydroxide compound, and an alkali metal hydride compound, and among these, an organolithium compound such as butyllithium is preferable.

Examples of the organic base compound include amine compounds having an amidine skeleton or a guanidine skeleton.

In addition, as the base catalyst, a metal catalyst such as an organic magnesium compound and an organic zinc compound can also be used.

In the reaction step, the base catalyst is preferably added in an amount of 0.005 to 1.5 molar equivalents relative to the hydroxy group of the alcohol compound. When water is used, the basic catalyst is preferably added in an amount of 0.005 to 3.0 molar equivalents relative to the water.

### [β-Methyl-δ-Valerolactone]

As the β-methyl-δ-valerolactone that can be used in the present embodiment, one produced by a known method can be used. For example, it can be produced by a known method using 2-hydroxy-4-methyltetrahydropyran as a raw material (JP 06-53691 B).

In addition, β-methyl-δ-valerolactone can be a commercially available product, and can be used regardless of whether it is derived from petrochemicals or from biomass.

In the reaction step, β-methyl-δ-valerolactone is preferably added in an amount of 5 to 1,500 molar equivalents relative to the hydroxy group of the alcohol compound. When water is used, β-methyl-δ-valerolactone is preferably added in an amount of 5 to 1,500 molar equivalents relative to the water.

### [Terminal Modifying Agent]

Examples of the terminal modifying agent that can be used in the present embodiment include acid anhydrides and acid halides (acid halides are also referred to as "halogenated esters"). The acid anhydride and the acid halide are not particularly limited as long as the effects of the present invention can be obtained. For example, acid anhydrides and acid halides having at least one group selected from the group consisting of a linear or branched alkyl group having 1 to 20 carbon atoms, a linear or branched alkenyl group having 2 to 20 carbon atoms, an aryl group having 6 to 12 carbon atoms, and an arylalkyl-group having 7 to 12 carbon atoms can be used. In the case of the above-mentioned "branched alkyl group", the number of carbon atoms is 3 to 20, and in the case of the above-mentioned "branched alkenyl group", the number of carbon atoms is 3 to 20.

Specific examples of the acid anhydride include acetic anhydride, oxalic anhydride, propionic anhydride, succinic anhydride, maleic anhydride, benzoic anhydride, phthalic anhydride, glutaric anhydride, methacrylic anhydride, butyric anhydride, isobutyric anhydride, 1,8-naphthalic anhydride, trifluoroacetic anhydride, and cyclohexanecarboxylic acid anhydride.

Specific examples of the acid halide include acetyl chloride, propionyl chloride, butyroyl chloride, trifluoroacetyl chloride, benzoyl chloride, 2-furoyl chloride, hexanoyl chloride, phenylacetyl chloride, acetyl bromide, propionyl bromide, and benzoyl bromide.

In the reaction step, the terminal modifying agent is preferably added in an amount of 1.0 to 20.0 molar equivalents relative to the hydroxy group of the alcohol compound. When water is used, the terminal modifying agent is preferably added in an amount of 1.0 to 20.0 molar equivalents relative to the water.

### [Co-catalyst]

In the reaction step, a co-catalyst may be added as necessary.

As the co-catalyst, for example, an amine compound such as triethylamine, tributylamine, trioctylamine, imidazole, pyridine, aminopyridine, or 4-dimethylaminopyridine can be used.

In the reaction step, the co-catalyst can be added in an amount of 0.001 to 10 molar equivalents relative to the hydroxy group of the alcohol compound. When water is used, the co-catalyst can be added in an amount of 0.001 to 10 molar equivalents relative to the water.

### [Solvent]

The reaction step can be carried out in the presence of a solvent inert to the ring-opening polymerization reaction. Examples of the solvent include aliphatic hydrocarbons such as cyclohexane, methylcyclohexane, n-hexane, and n-pentane; and aromatic hydrocarbons such as benzene, toluene, and xylene.

### [Reaction Conditions]

In the reaction step, the reaction temperature when β-methyl-δ-valerolactone, an alcohol compound or water, and a base catalyst are reacted is usually 20 to 100°C, and the reaction time is usually 1 minute to 24 hours.

In addition, after the terminal modifying agent is added to the reaction liquid in the reaction step, the reaction temperature at the time of performing the terminal modification reaction may be usually 20 to 80°C, and the reaction time is usually 1 minute to 24 hours.

### <Post-Treatment Step>

By undergoing the above reaction step, the polymer of the present embodiment can be produced. If necessary, a post-treatment step may be performed to isolate the produced polymer.

As the post-treatment step, a suitable method can be adopted from known methods. For example, the reaction mixture after the reaction step is washed using a reaction solvent and water, and then concentrated, and can be purified by a method used for separation and purification of ordinary organic compounds, such as distillation.

### <Applications>

The polymer of the present embodiment is suitable as a modifier for resins. Other applications of the polymer of the present embodiment include, for example, a pressure-sensitive adhesive and an adhesive.

When the polymer of the present embodiment is used as a modifier for resins, examples of the resin to be modified include a biomass resin, a biodegradable resin, and a general-purpose thermoplastic resin. Among them, a more excellent modification effect of the biomass resin and the biodegradable resin can be expected.

Examples of the biomass resin or the biodegradable resin include polylactic acid (PLA), polycaprolactone (PCL), polybutylene succinate (PBS), polybutylene succinate adipate (PBSA), polybutylene adipate terephthalate (PBAT), polyglycolic acid (PGA), polyethylene furanoate (PEF), polyhydroxyalkanoate (PHA) (for example, polyhydroxybutyrate (PHB), polyhydroxybutyrate valerate (PHBV), and 3-hydroxybutyric acid-3-hydroxyhexanoic acid copolymerized polyester), cellulose acetate (CA), and starch polyester (Mater-Bi (registered trademark)).

Examples of the general-purpose thermoplastic resin include a thermoplastic resin and a thermoplastic elastomer having a suitable processing temperature of about 200°C or lower. Examples of the thermoplastic resin include polymethyl methacrylate (PMMA), polyvinyl alcohol (PVA), ethylene-vinyl acetate copolymer (EVA), polyethylene (PE), polypropylene (PP), polyvinyl chloride (PVC), polystyrene (PS), acrylonitrile-butadiene-styrene copolymer (ABS), polycarbonate (PC), polyethylene terephthalate (PET), and polyethylene terephthalate succinate (PETS). Examples of the thermoplastic elastomer include olefin-based, styrene-based, ester-based, urethane-based, acrylic-based, vinyl chloride-based, amide-based, and fluorine-based thermoplastic elastomers. Specific examples include polyester elastomer (TPC) and thermoplastic polyurethane (TPU).

In addition, examples of the general-purpose thermoplastic resin include a thermoplastic resin having high heat resistance to a temperature of more than about 200°C (also referred to as a "high heat-resistant resin"). Examples of the high heat-resistant resin include polyamide (PA), polyacetal (POM), fluororesin [for example, polytetrafluoroethylene (PTFE), perfluoroalkoxy fluororesin (PFA), and tetrafluoroethylene-hexafluoropropylene copolymer (FEP)], polycyclohexylenedimethylene terephthalate (PCT), polymethylpentene (PMP), polyethylene naphthalate (PEN), and polybutylene terephthalate (PBT).

The resin to be modified using the polymer of the present embodiment is not limited to the biomass resin, the biodegradable resin, and the general-purpose thermoplastic resin.

### Examples

Hereinafter, the present invention will be specifically described with reference to Examples and Comparative Examples, but the present invention is not limited thereto.

### <Measurement and Evaluation Method>

Various physical properties were measured or evaluated by the following methods.

### [Number Average Molecular Weight] and [Weight Average Molecular Weight]

Each of the polymers obtained in Examples and Comparative Examples was used as a sample, and the number average molecular weight (Mn) and the weight average molecular weight (Mw) were determined as molecular weights in terms of standard polystyrene by gel permeation chromatography (GPC). Specific measurement methods are as follows.

### <Case Where Mn is less than 15,000>

A sample having Mn of less than 15,000 was measured according to the following to obtain Mn and Mw.

Tetrahydrofuran (THF) solution was used as an eluent. A sample (10 mg in terms of resin) was weighed and dissolved in 1 mL of the above eluent. A measurement sample was prepared by passing the solution through a 0.2 µm membrane filter. The measurement conditions were as follows.

### (Measurement Conditions)

Apparatus: HLC-8320GPC EcoSEC (manufactured by Tosoh Corporation)
Column: KF-803, KF-802.5, KF-802 (manufactured by Showa Denko K.K.), three columns were connected in series.
Eluent: tetrahydrofuran
Flow rate: 0.9 mL/min
Sample injection volume: 30 µL
Column temperature: 40°C
Standard polystyrene: approximated in a cubic equation using PSt Oligomer Kit (molecular weight: 589 to 98,900) manufactured by Tosoh Corporation.
Detector: RI detector

### <Case Where Mn is 15,000 or more>

A sample having Mn of 15,000 or more was measured according to the following to obtain Mn and Mw.

Tetrahydrofuran (THF) solution was used as an eluent. A sample (1.0 mg in terms of resin) was weighed and dissolved in 1 mL of the above eluent. A measurement sample was prepared by passing the solution through a 0.2 µm membrane filter. The measurement conditions were as follows.

### (Measurement Conditions)

Apparatus: HLC-8220GPC (manufactured by Tosoh Corporation)
Column: TSK-gel SuperMultiporeHZ-M (manufactured by Tosoh Corporation), two columns were connected in series.
Eluent: tetrahydrofuran
Flow rate: 0.35 mL/min
Sample injection volume: 10 µL
Column temperature: 40°C
Standard polystyrene: approximated in a cubic equation using Polystyrene Molecular Weight Analytical Standard (molecular weight: 580 to 1,214,000) manufactured by GL Sciences Inc.
Detector: RI detector

### [Viscosity]

The viscosity (unit: mPa·s) of the polymer was measured at the measurement temperatures shown in Table 1 using an E-type viscometer (product name: TVE-25 type viscometer, manufactured by Toki Sangyo Co., Ltd.).

### [Thermogravimetric Analysis (5% Weight Reduction Temperature)]

A thermogravimetric analyzer (product name: TGA/DSC1, manufactured by Mettler-Toledo International, Inc.) was used to measure the temperature at which the weight lost by 5% when the temperature was raised from 50°C to 500°C at a rate of 10°C/min under a nitrogen gas atmosphere (flow rate: 100 mL/min).

### <Modification Evaluation>

The polymers obtained in Examples and Comparative Examples were evaluated as modifiers as follows.

### [Glass Transition Temperature]

### (1) Preparation of Kneaded Product

100 parts by mass of polylactic acid (manufactured by NatureWorks LLC, trade name: INGEO 2500HP, melting point: 177°C) and 10 parts by mass of the polymer obtained in Examples or Comparative Examples were kneaded at 210°C for 5 minutes at 50 rpm using a Labo Plastmill (apparatus name: 3S150, manufactured by Toyo Seiki Seisaku-sho, Ltd.).

### (2) Glass Transition Temperature

The resin kneaded as described above was raised from 30°C to 220°C at a rate of 10°C/min under a nitrogen flow rate (100 mL/min) using a differential scanning calorimeter (device name: DSC25, manufactured by TA Instruments), held at 220°C for 5 minutes, and then cooled to -70°C at a rate of 10°C/min. The glass transition temperature was evaluated when the temperature was raised to 220°C at a rate of 10°C/min after being held at -70°C for 5 minutes.

### [Tensile Elongation]

### (1) Preparation of Elongation Evaluation Test Piece

The resin kneaded in the above (1) Preparation of Kneaded Product was depressurized to -0.1 MPaG using an oil rotary pump and a reduced pressure hot press apparatus (apparatus name: IMC-183B, manufactured by Imoto Machinery Co., Ltd.), preheated at 200°C for 5 minutes, and then pressed at 70 kN for 3 minutes. Thereafter, the mixture was pressed at 70 kgf/cm² for 3 minutes in a cooling press apparatus equipped with water flow cooling to prepare a press plate having a thickness of 0.5 mm.

A JIS Type 3 dumbbell-shaped test piece was punched out from the obtained press plate, and subjected to a crystallization treatment in a thermostatic bath at 80°C for 16 hours.

### (2) Elongation Evaluation

The dumbbell-shaped test piece prepared above was stored at 23°C and a humidity of 49% for 24 hours or longer, and the breaking strain value was measured when evaluated at 23°C and a humidity of 49% at a tensile speed of 5 mm/min using a universal material testing machine (apparatus name: INSTRON 5900R-5666, manufactured by Instron Corporation). The average value of 5 measurements was adopted.

### [Impact Strength]

### (1) Preparation of Impact Resistance Evaluation Test Piece

The resin kneaded in the above (1) Preparation of Kneaded Product was depressurized to -0.1 MPaG using an oil rotary pump and a reduced pressure hot press apparatus ("IMC-183B" manufactured by Imoto Machinery Co., Ltd.), preheated at 200°C for 5 minutes, and then pressed at 50 kN for 3 minutes. Thereafter, the mixture was pressed at 70 kgf/cm² for 3 minutes in a cooling press apparatus equipped with water flow cooling to prepare a press plate having a thickness of 3.0 mm.

A strip piece of 80 × 10 mm was cut out from the obtained pressed plate and subjected to a crystallization treatment in a thermostatic bath at 80°C for 16 hours. V-notch processing (remaining width of 8 mm, tip radius of 0.25 mm) was performed on the center portion of the long side to prepare a notched strip test piece.

### (2) Impact Resistance Test

The prepared notched strip test piece was stored at 23°C and a humidity of 49% for 24 hours or longer, and the impact strength at the time of measurement using a Charpy impact resistance testing machine ("DG-CB" manufactured by Toyo Seiki Seisaku-sho, Ltd.) at 23°C and a humidity of 49% with a hammer load of 2 J was evaluated. The average value of 10 measurements was adopted.

### [Example 1]

A glass four-neck flask having an internal volume of 500 mL was substituted with nitrogen, 7.9 g (90 mmol) of isoamyl alcohol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes.

Next, 11.0 g (108 mmol) of acetic anhydride and 0.55 g (4.5 mmol) of 4-dimethylaminopyridine dissolved in 5.5 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 155 g (0.04 mmol) of a polymer.

The obtained polymer is represented by the general formula (I) described above, and R¹, R², and n are as shown in Table 1.

### [Example 2]

A glass four-neck flask having an internal volume of 500 mL was substituted with nitrogen, 1.6 g (18.2 mmol) of isoamyl alcohol and 231 g (2,025 mmol) of β-methyl-δ-valerolactone were added thereto, and the temperature was raised to 60°C. 0.35 mL of n-butyllithium (1.6 M hexane solution) was added thereto, and the mixture was stirred at 60°C for 60 minutes.

Next, 2.3 g (22.5 mmol) of acetic anhydride and 0.11 g (0.9 mmol) of 4-dimethylaminopyridine dissolved in 1.1 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 162 g (0.016 mmol) of a polymer.

The obtained polymer is represented by the general formula (I) described above, and R¹, R², and n are as shown in Table 1.

### [Example 3]

A glass four-neck flask having an internal volume of 1,000 mL was substituted with nitrogen, 1.6 g (18.2 mmol) of isoamyl alcohol and 623 g (5,460 mmol) of β-methyl-δ-valerolactone were added thereto, and the temperature was raised to 60°C. 0.34 mL of n-butyllithium (1.6 M hexane solution) was added thereto, and the mixture was stirred at 60°C for 60 minutes.

Next, 2.2 g (21.8 mmol) of acetic anhydride and 0.11 g (0.9 mmol) of 4-dimethylaminopyridine dissolved in 1.1 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 450 g (0.016 mmol) of a polymer.

The obtained polymer is represented by the general formula (I) described above, and R¹, R², and n are as shown in Table 1.

### [Example 4]

A glass four-neck flask having an internal volume of 1,000 mL was substituted with nitrogen, 0.9 g (10 mmol) of isoamyl alcohol and 627 g (5,500 mmol) of β-methyl-δ-valerolactone were added thereto, and the temperature was raised to 60°C. 0.41 mL of n-butyllithium (1.6 M hexane solution) was added thereto, and the mixture was stirred at 60°C for 60 minutes.

Next, 1.2 g (12 mmol) of acetic anhydride and 0.06 g (0.5 mmol) of 4-dimethylaminopyridine dissolved in 1.0 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 470 g (0.01 mmol) of a polymer.

The obtained polymer is represented by the general formula (I) described above, and R¹, R², and n are as shown in Table 1.

### [Example 5]

A glass four-neck flask having an internal volume of 3,000 mL was substituted with nitrogen, 0.9 g (10 mmol) of isoamyl alcohol and 913 g (8,000 mmol) of β-methyl-δ-valerolactone were added thereto, and the temperature was raised to 60°C. 0.45 mL of n-butyllithium (1.6 M hexane solution) was added thereto, and the mixture was stirred at 60°C for 60 minutes.

Next, 1.2 g (12 mmol) of acetic anhydride and 0.06 g (0.5 mmol) of 4-dimethylaminopyridine dissolved in 1.0 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 620 g (0.008 mmol) of a polymer.

The obtained polymer is represented by the general formula (I) described above, and R¹, R², and n are as shown in Table 1.

### [Example 6]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 34.2 g (216 mmol) of butyric anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 158 g (0.04 mmol) of a polymer.

The obtained polymer is represented by the general formula (I-b) described above, and R¹, R², n, and m are as shown in Table 1.

### [Example 7]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes.

Next, 48.9 g (216 mmol) of benzoic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 153 g (0.05 mmol) of a polymer.

The obtained polymer is represented by the general formula (I-b) described above, and R¹, R², n, and m are as shown in Table 1.

### [Example 8]

A glass four-neck flask having an internal volume of 500 mL was substituted with nitrogen, 8.1 g (90 mmol) of 1,4-butanediol and 231 g (2,025 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 22.1 g (216 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 155 g (0.04 mmol) of a polymer.

The obtained polymer is represented by the general formula (I-a) described above, and R¹, R², n, and m are as shown in Table 1.

### [Example 9]

A glass four-neck flask having an internal volume of 500 mL was substituted with nitrogen, 14.4 g (90 mmol) of 1,9-nonanediol and 231 g (2,025 mmol) of β-methyl-δ-valerolactone were added thereto, and the temperature was raised to 60°C. 0.80 mL of n-butyllithium (1.6 M hexane solution) was added thereto, and the mixture was stirred at 60°C for 60 minutes.

Next, 22.1 g (216 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 150 g (0.04 mmol) of a polymer.

The obtained polymer is represented by the general formula (I-a) described above (Q represents 9), and R¹, R², n, and m are as shown in Table 1.

### [Example 10]

A glass four-neck flask having an internal volume of 500 mL was substituted with nitrogen, 21.8 g (90 mmol) of cetanol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes.

Next, 11.0 g (108 mmol) of acetic anhydride and 0.55 g (4.5 mmol) of 4-dimethylaminopyridine dissolved in 5.5 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 158 g (0.04 mmol) of a polymer.

The obtained polymer is represented by the general formula (I) described above, and R¹, R², and n are as shown in Table 1.

### [Example 11]

A glass four-neck flask having an internal volume of 500 mL was substituted with nitrogen, 14.2 g (90 mmol) of decanol and 231 g (2,025 mmol) of β-methyl-δ-valerolactone were added thereto, and the temperature was raised to 60°C. 0.80 mL of n-butyllithium (1.6 M hexane solution) was added thereto, and the mixture was stirred at 60°C for 60 minutes.

Next, 11.0 g (108 mmol) of acetic anhydride and 0.55 g (4.5 mmol) of 4-dimethylaminopyridine dissolved in 5.5 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 151 g (0.04 mmol) of a polymer.

The obtained polymer is represented by the general formula (I) described above, and R¹, R², and n are as shown in Table 1.

### [Example 12]

A glass four-neck flask having an internal volume of 500 mL was substituted with nitrogen, 12.1 g (90 mmol) of trimethylolpropane and 231 g (2,025 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 33.1 g (324 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 145 g (0.04 mmol) of a polymer.

The obtained polymer is represented by the general formula (I-e) described above, and R¹, R², n, and m are as shown in Table 1.

### [Example 13]

A glass four-neck flask having an internal volume of 2,000 mL was substituted with nitrogen, 12.1 g (90 mmol) of trimethylolpropane and 1,064 g (9,324 mmol) of β-methyl-δ-valerolactone were added thereto, and the temperature was raised to 60°C. 0.79 mL of n-butyllithium (1.6 M hexane solution) was added thereto, and the mixture was stirred at 60°C for 60 minutes.

Next, 33.1 g (324 mmol) of acetic anhydride and 1.1 g (9.0 mmol) of 4-dimethylaminopyridine dissolved in 11 g of β-methyl-δ-valerolactone were put into the above glass four-neck flask, and the mixture was stirred at 60°C for 60 minutes to obtain a reaction solution containing a polymer.

The obtained reaction solution containing a polymer was purified by extraction with toluene and water and distillation, thereby obtaining 873 g (0.08 mmol) of a polymer.

The obtained polymer is represented by the general formula (I-e) described above, and R¹, R², n, and m are as shown in Table 1.

### [Comparative Example 1]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.78 mL of n-butyllithium (1.6 M hexane solution) was added thereto, and the mixture was stirred at 60°C for 60 minutes.

Next, 22.1 g (216 mmol) of acetic anhydride was put into the above glass four-neck flask, and the mixture was stirred at 100°C for 6 hours to obtain a reaction solution containing a polymer.

The obtained reaction solution containing a polymer was purified by extraction with toluene and water and distillation, thereby obtaining 114 g (0.06 mmol) of a polymer.

The obtained polymer is represented by the following general formula, and n and m are as shown in Table 1.

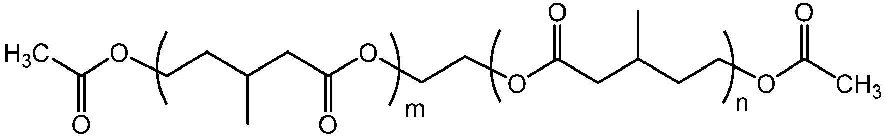

### [Comparative Example 2]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes to perform a ring-opening polymerization reaction.

The obtained reaction solution containing a polymer was purified by extraction with toluene and water and using a thin film evaporator to obtain 135 g (0.04 mmol) of a polymer.

The obtained polymer is represented by the following structural formula (II), and n and m are as shown in Table 1.

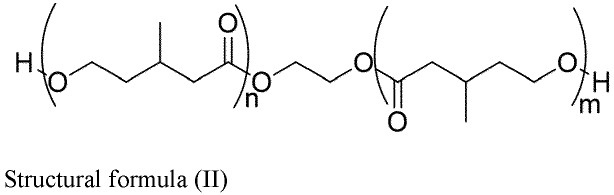

### [Comparative Example 3]

A glass four-neck flask having an internal volume of 500 mL was substituted with nitrogen, 5.6 g (90 mmol) of ethylene glycol and 231 g (2,025 mmol) of β-methyl-δ-valerolactone were added thereto, and the temperature was raised to 60°C. 0.78 mL of n-butyllithium (1.6 M hexane solution) was added thereto, and the mixture was stirred at 60°C for 60 minutes to perform a ring-opening polymerization reaction.

The obtained reaction solution containing a ring-opening polymer was purified by extraction with toluene and water, reprecipitation into a large amount of hexane, and drying under reduced pressure at 80°C under vacuum.

After 1,500 mL of dichloromethane as a solvent was placed in a glass four-neck flask having an internal volume of 3,000 mL, the purified ring-opening polymer, 22.7 g (270 mmol) of 3,4-dihydro-2H-pyran, and 0.9 g (3.6 mmol) of pyridinium p-toluenesulfonate were placed, and the mixture was stirred at 25°C for 5 hours to obtain a reaction solution containing a polymer.

The obtained reaction solution containing a polymer was purified by extraction with dichloromethane and water and distillation, thereby obtaining 114 g (0.06 mmol) of a polymer.

The obtained polymer is represented by the following structural formula (III), and n and m are as shown in Table 1.

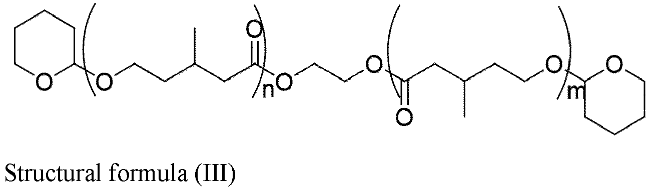

### [Comparative Example 4]

A glass four-neck flask having an internal volume of 500 mL was substituted with nitrogen, 7.9 g (90 mmol) of isoamyl alcohol and 231 g (2,025 mmol) of β-methyl-δ-valerolactone were added thereto, and the temperature was raised to 60°C. 0.84 mL of n-butyllithium (1.6 M hexane solution) was added thereto, and the mixture was stirred at 60°C for 60 minutes to perform a ring-opening polymerization reaction.

The obtained reaction solution containing a ring-opening polymer was purified by extraction with toluene and water, and using a thin film evaporator.

After 1,500 mL of dichloromethane as a solvent was placed in a glass four-neck flask having an internal volume of 3,000 mL, the purified ring-opening polymer, 11.4 g (135 mmol) of 3,4-dihydro-2H-pyran, and 0.45 g (1.8 mmol) of pyridinium p-toluenesulfonate were placed, and the mixture was stirred at 25°C for 5 hours to obtain a reaction solution containing a polymer.

The obtained reaction solution containing a polymer was purified by extraction with dichloromethane and water and distillation, thereby obtaining 130 g (0.04 mmol) of a polymer.

The obtained polymer is represented by the following structural formula (IV), and n is as shown in Table 1.

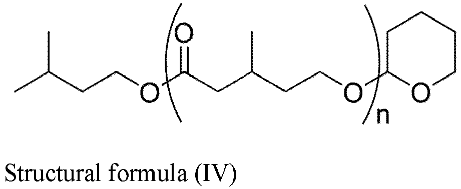

Regarding the polymers obtained in Examples and Comparative Examples, the results of the measurement and evaluation of various physical properties described above are shown in Table 1. Further, for reference, the glass transition temperature, tensile elongation, and impact strength of the polylactic acid alone are shown in Table 1.

**Table 1**

| | R¹ | R² | n | m | Number average molecular weight | Weight average molecular weight | Viscosity (mPa·s) | Measurement temperature (°C) | 5% weight reduction temperature (°C) | Tg (°C) | Tensile elongation (%) | Impact strength (kJ/m²) |
|---|---|---|---|---|---|---|---|---|---|---|---|---|
| Example 1 | (CH₃)₂CHCH₂CH₂ | CH₃ | 25 | - | 4,000 | 6,000 | 5,500 | 30 | 361 | 55 | 95 | 42 |
| Example 2 | (CH₃)₂CHCH₂CH₂ | CH₃ | 90 | - | 10,300 | 23,700 | 38,500 | 60 | 367 | 60 | 110 | 38 |
| Example 3 | (CH₃)₂CHCH₂CH₂ | CH₃ | 215 | - | 25,300 | 49,300 | 123,000 | 80 | 363 | 60 | 100 | 35 |
| Example 4 | (CH₃)₂CHCH₂CH₂ | CH₃ | 420 | - | 48,000 | 92,500 | Unmeasurable | 80 | 360 | 60 | 80 | 33 |
| Example 5 | (CH₃)₂CHCH₂CH₂ | CH₃ | 570 | - | 68,000 | 115,000 | Unmeasurable | 80 | 358 | 60 | 70 | 25 |
| Example 6 | X-CH₂CH₂ | n-Pr | 13 | 13 | 4,200 | 6,500 | 5,800 | 30 | 360 | 55 | 95 | 31 |
| Example 7 | X-CH₂CH₂ | Ph | 11 | 11 | 3,300 | 5,100 | 5,000 | 30 | 357 | 55 | 92 | 30 |
| Example 8 | X-CH₂CH₂CH₂CH₂ | CH₃ | 13 | 13 | 4,100 | 6,300 | 5,700 | 30 | 358 | 55 | 92 | 33 |
| Example 9 | X-C₉H₁₈ | CH₃ | 12 | 12 | 4,000 | 6,200 | 5,400 | 30 | 361 | 55 | 90 | 30 |
| Example 10 | C₁₆H₃₃ | CH₃ | 25 | - | 4,200 | 6,600 | 6,000 | 30 | 355 | 55 | 85 | 30 |
| Example 11 | C₁₀H₂₁ | CH₃ | 24 | - | 4,000 | 6,200 | 5,600 | 30 | 357 | 55 | 85 | 32 |
| Example 12 | CH₃CH₂C(CH₂)(CH₂-X)₂ | CH₃ | 8 | 8 | 3,900 | 5,800 | 5,100 | 30 | 360 | 54 | 70 | 31 |
| Example 13 | CH₃CH₂C(CH₂)(CH₂-X)₂ | CH₃ | 54 | 54 | 18,700 | 35,000 | 50,300 | 60 | 362 | 59 | 105 | 29 |
| Comparative Example 1 | X-CH₂CH₂ | CH₃ | 7 | 7 | 1,800 | 2,800 | 3,300 | 30 | 360 | 53 | 50 | 13 |
| Comparative Example 2 | Structural formula (II) | | 10 | 10 | 3,500 | 5,200 | 5,100 | 30 | 267 | 53 | 35 | 13 |
| Comparative Example 3 | Structural formula (III) | | 11 | 11 | 3,600 | 5,400 | 5,200 | 30 | 360 | 54 | 40 | 14 |
| Comparative Example 4 | Structural formula (IV) | | 22 | - | 3,600 | 5,300 | 5,200 | 30 | 360 | 55 | 41 | 14 |
| Reference | Polylactic acid alone | | | | - | - | - | - | - | 61 | 3 | 9 |

The notation in Table 1 is as follows.
· In the column of R¹, "X" indicates the above-mentioned formula (X).
· In the column of R², "n-Pr" indicates a n-propyl group.
· In the column of R², "Ph" indicates a phenyl group.
· In the column of viscosity, "unmeasurable" means that the viscosity of the polymer was high and could not be measured even when the viscosity measurement temperature was increased to 80°C.

From Table 1, it is found that the polymers obtained in Examples have good glass transition temperature, tensile elongation, and impact strength, and are excellent in balance of modification performance, as compared with the polymers obtained in Comparative Examples.

Further, it is found that the impact strength in Examples 1 to 13 is more excellent than the impact strength in polylactic acid alone and Comparative Examples 1 to 4. In particular, from the comparison between Examples 1 to 11 and Comparative Example 2, it is found that the thermal stability was significantly improved by the present structure of the present embodiment. From the comparison between Example 1 and Comparative Example 4 and the comparison between Examples 6 and 7 and Comparative Example 3, it is found that the resin compositions using the polymers obtained in Examples have good tensile elongation and impact resistance. Therefore, it is found that the polymer of the present embodiment is useful as a modifier.

### Industrial Applicability

The polymer of the present embodiment can be used as a modifier for resins, and is particularly suitable as a modifier for polylactic acid.

## Claims

1. A β-methyl-δ-valerolactone polymer represented by the following general formula (I): 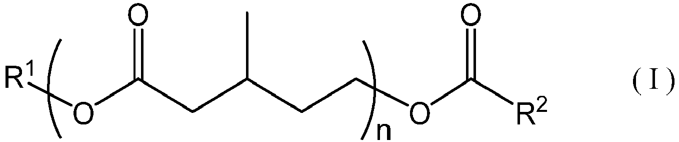
wherein, R¹ represents a hydrogen atom, a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the following formula (X), or an oxygen atom-containing hydrocarbon group in which one hydrogen atom bonded to a carbon atom at at least one terminal of a branched alkyl group having 3 to 20 carbon atoms is substituted with a group represented by the following formula (X); in the following formula (X), a bonding site represented by * is bonded to the linear alkyl group having 1 to 20 carbon atoms or the branched alkyl group having 3 to 20 carbon atoms; 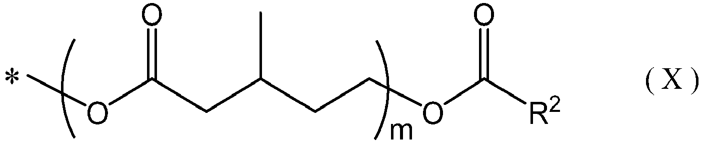
R² represents a linear or branched alkyl group having 1 to 20 carbon atoms, a linear or branched alkenyl group having 2 to 20 carbon atoms, an aryl group having 6 to 12 carbon atoms, or an arylalkyl group having 7 to 12 carbon atoms; provided that when R¹ is a group in which one hydrogen atom bonded to a carbon atom at a terminal of an ethyl group is substituted with a group represented by the formula (X), all R²'s are not a methyl group at the same time; n is an integer of 8 to 1,000, and m is an integer of 8 to 1,000; and when a plurality of R²'s and m's are present, they may be the same or different from each other.

2. The β-methyl-δ-valerolactone polymer according to claim 1, wherein R¹ is a linear or branched alkyl group having 1 to 20 carbon atoms, a linear or branched alkenyl group having 2 to 20 carbon atoms, an aryl group having 6 to 12 carbon atoms, an arylalkyl group having 7 to 12 carbon atoms, an oxygen atom-containing hydrocarbon group in which one hydrogen atom bonded to a carbon atom at a terminal of a linear alkyl group having 1 to 20 carbon atoms is substituted with a group represented by the formula (X), or an oxygen atom-containing hydrocarbon group in which one hydrogen atom bonded to a carbon atom at at least one terminal of a branched alkyl group having 3 to 20 carbon atoms is substituted with a group represented by the formula (X).

3. The β-methyl-δ-valerolactone polymer according to claim 1, wherein R¹ is a linear or branched alkyl group having 1 to 16 carbon atoms.

4. The β-methyl-δ-valerolactone polymer according to claim 1, wherein R¹ is an oxygen atom-containing hydrocarbon group in which one hydrogen atom bonded to a carbon atom at a terminal of a linear alkyl group having 1 to 20 carbon atoms is substituted with a group represented by the formula (X).

5. The β-methyl-δ-valerolactone polymer according to claim 1, wherein R¹ is an oxygen atom-containing hydrocarbon group in which one hydrogen atom bonded to a carbon atom at at least one terminal of a branched alkyl group having 3 to 10 carbon atoms is substituted with a group represented by the formula (X).

6. The β-methyl-δ-valerolactone polymer according to any one of claims 1 to 5, wherein R² is a linear alkyl group having 1 to 10 carbon atoms or an aryl group having 6 to 12 carbon atoms.
